# EUROPEAN PATENT APPLICATION

(11) **EP 4 206 125 A1**
(43) Date of publication of application: **05.07.2023**
(21) Application number: 23157483.1
(22) Date of filing: 25.07.2019
(51) Int. Cl.: C01B 25/222, C22B 3/26, C22B 3/44, C22B 7/00, C01B 25/22

(54) **PROCESS FOR PREPARING TECHNICAL GRADE PHOSPHORIC ACID FROM SEWAGE SLUDGE ASH**

(62) Divisional of application: 19382640.1
(71) Applicant: Técnicas Reunidas, S.A., 28050 Madrid (ES)
(72) Inventor: OCAÑA GARCÍA, Nuria, E-28830 San Fernando de Henares, Madrid (ES); PINEDO GONZÁLEZ, María Teresa, E-28830 San Fernando de Henares, Madrid (ES); MEJÍAS CORDERO, Ana Belén, E-28830 San Fernando de Henares, Madrid (ES); FRADES TAPIA, Maria, E-28830 San Fernando de Henares, Madrid (ES)
(74) Representative: ABG Intellectual Property Law, S.L.

(57) **Abstract**

The present invention refers to an improved process for recovering phosphoric acid from sewage sludge ash, said process comprising a first moderate leaching step, a neutralization step and a further strong leaching step, as well as solvent extraction stages in the presence of organic solvents in order to remove iron and to recover the phosphorous contained in said ash in the form of phosphoric acid.

## Description

### FIELD OF THE INVENTION

The present invention concerns the recovery of reusable materials by extraction techniques, and more particularly the recovery of technical grade phosphoric acid from waste incineration, namely sewage sludge ash.

### BACKGROUND

The recovery and reuse of sewage sludge has increased in recent years, largely due to environmental and political considerations.

It is a common practice at many large sewage plants to burn dewatered sludge in an incinerator. The resultant ash is a mainly inorganic residue containing various metals, such as P, Fe, Al, Ca and Si. The disposal of this ash without further treatment may cause serious environmental pollution, mainly due to the presence of heavy metal and toxic substances in combination to the metals mentioned above. Furthermore, the untreated ash has light weight and is finely divided and dusty, with the result of its difficulty to handle, transport and dump. Therefore, the disposal of such ash is an increasing problem in many parts of the world.

In view of that problem, it has become necessary to develop different procedures for the treatment of these residues with the aim of recovering the elements contained therein to be reused in different applications.

Actually, there have been many different attempts and methods of using sewage sludge as a valuable source of raw materials in the state of the art. The recovery of reusable materials from the sewage sludge is of increasing significance that concerns, in particular, the reusable of phosphorous material for which there is a world-wide high demand with, at the same time, limited availability.

Depending on the mode of operation of the sewage treatment plant, the concentration of phosphorous is between 4 and 8 wt% and between 10 and 22 wt% of P₂O₅. Further main components of the sewage sludge are CaO, SiO₂, Al₂O₃ and Fe₂O₃.

Various approaches have been disclosed in the prior art for obtaining phosphorous from the sewage sludge ash resulting from incineration processes. Reported work regarding phosphorous recovering from sewage sludge ash is either related to thermo-chemical treatment or acid leaching processes.

Within thermo-chemical treatment, sewage sludge ash is mixed with chloride salts and the resulting mixture is subjected to a temperature between 900 and 1100°C. Under these conditions, metal chlorides are volatilized and phosphorous converted to a more bioavailable form so that it can be used, for example, as a fertilizer.

WO2015/189333 describes a method for obtaining citrate soluble phosphate compound from sewage sludge ash, said method is also based on the calcination of a mixture of the P-containing raw material with an alkaline-sulfuric compound. The resulting product easily releases phosphate ions to produce a fertilizer.

However, there are concerns over the operating costs of thermo-chemical treatment and with equipment lifetime due to the highly corrosive conditions generated.

On the other hand, acid washing processes (also referred as to acid leaching processes) have, among many others, the benefit of potentially lower energy consumption.

Document EP0004778 describes a process for the treatment of sewage sludge ash comprising the leaching of the ash in an acidic solution, more particularly in a sulfuric acid solution, at a temperature of not more than 100°C to recover phosphoric acid, and further treatment of the undissolved residue to recover precious metals.

US2014/0056796 refers to a method for recovery phosphates by a first leaching step in the presence of an acidic solution at about 20-40°C, and further phosphate isolation by reprecipitation.

EP2792949 discloses a process for the production of phosphorous-containing compounds from sewage sludge ash including the addition of an acid, such as HCl, to leach the ash, and subsequent precipitation stages to obtain and separate a calcium phosphate. EP2602013 also refers to a process for recovering phosphorous compounds from sewage sludge ash, which first includes an acid digestion or leaching of said raw material with a dilute mineral acid, with subsequent addition of aluminium salts to precipitate and to separate phosphorous compounds.

In these cases, the resulting phosphorous-containing products are low grade and most of them are used in agriculture as phosphate fertilizers.

Although most of global phosphate demand is for fertilizer manufacture, there are other speciality applications that require technical grade phosphoric acid (85% concentration) which even attracts significantly higher revenues than merchant grade phosphoric acid (50% concentration) generally used in said fertilizing manufacture.

In fact, an advantage derived from the acid leaching process is the possibility to produce a phosphoric acid product that could be tailored to niche products with potentially higher market prices.

US2016/0312333 refers to a process for the treatment of ash resulting from incineration of sludge, said process includes the digestion of the ash by a liqueur attack containing phosphate ions in solution, thus obtaining a first liquid phase containing phosphate ions which is separated from a solid phase containing some impurities. The first liquid phase is subjected to a purification step by means of liquid-liquid extraction with an organic solvent or by applying an ion exchange resin, so as to obtain a second liquid phase having also phosphate ions but a lower content of other metals. This second liquid phase can even be subjected to a re-extraction step by using a re-extraction aqueous agent thus obtaining an aqueous phase containing the phosphate ions which is separated from the organic phase. The liquid phase obtained after this purification step is a purified phosphoric acid solution which contain metal ions in low proportions.

Donatello et al. (Waste Management, 2010, 30, 1634-1642) describe the recovery of phosphorous from sewage sludge ash by using a sulfuric acid washing procedure to obtain technical grade phosphoric acid. The influence of reaction time, sulfuric acid concentration, liquid to solid ratio and source of sewage sludge ash on phosphorous recovery is examined. The process includes a leaching step with sulfuric acid, subsequent filtration and further purification and concentration of the liquid phase obtained therefrom. The purification step is carried out by using a cation exchange resin in order to remove or at least reduce the content of metallic cations, while the concentration of the purified filtrate is made by evaporating excess water.

In spite of the procedures described in the prior art to produce purified phosphoric acid, there is still a need to optimize the experimental parameters, as well as the operating steps, that allow the phosphate extraction from sewage sludge ash in a very efficient and selective way in order to obtain a technical grade phosphoric acid.

### BRIEF DESCRIPTION OF THE INVENTION

The authors of the present invention have developed a new process for treating incinerated sewage sludge that allows the production of technical grade phosphoric acid, being also possible to separate other metals contained in the ash, such as Fe, to be used in different applications.

This invention is based on the development of a process that allows phosphoric acid to be extracted in a very efficient way with a high level of purity. In particular, by the process of the invention, at least 95% of the phosphorous present in the ash is digested and recovered. Furthermore, the process provides a phosphoric acid that meets the standards required to be considered of technical grade with a minimum level of impurities.

Thus, the main aspect of the present invention refers to a process for recovering phosphoric acid from a solid phosphorous-bearing raw material, said process comprising:
a) a first leaching step of the phosphorous-bearing solid raw material with an acid aqueous solution having a pH between 1.5 and 3, thus obtaining:
   i) a leached solution comprising, solubilized, a main fraction of the phosphorous contained in the solid raw material in the form of phosphoric acid; and
   ii) a non-leached solid residue comprising the remaining fraction of the phosphorous contained in the solid raw material;
b) a neutralization step of the leached solution obtained in step (a) in the presence of a neutralizing agent, thus precipitating the phosphorous contained in said leached solution;
c) a second leaching step of the non-leached solid residue obtained in step (a) and of the precipitate obtained in step (b), with an acid aqueous solution having a pH lower than 0.5, thus obtaining a pregnant leached solution comprising phosphoric acid and solubilized iron;
d) solvent extraction of the solubilized iron contained in the pregnant leached solution obtained in step c) with an organic solvent having affinity for iron, thus obtaining an iron-loaded organic liquid phase and an aqueous raffinate containing phosphoric acid;
e) solvent extraction of the phosphoric acid from the aqueous raffinate obtained in step d) with an organic solvent, thus obtaining a phosphorous-loaded organic liquid phase and an aqueous raffinate containing impurities;
f) stripping of phosphoric acid from the phosphorous-loaded organic liquid phase obtained in step e) with water at a temperature between 50 and 70°C, thus obtaining an aqueous solution containing phosphoric acid.

### DESCRIPTION OF THE FIGURES

Figure 1 illustrates a flow chart schematically representing the steps of the process of the invention.
Figure 2 illustrates a flow chart of the chloride scrubbing, phosphorous recovery and Ti removal steps.

### DETAILED DESCRIPTION OF THE INVENTION

The method of the present invention is applicable to the treatment of phosphate- or phosphorous-bearing raw material, also referred to as solid residue. In the sense of the invention, the term "phosphate- or phosphorous-containing raw material" refers to a solid residue which contains at least one phosphate, as defined herein.

In a particular embodiment, the phosphate- or phosphorous-bearing raw material is an ash originating from the incineration of organic material, for example from sewage sludge and bio-wastes. This ash consists mainly of oxides and (bi)carbonates of various metals, such as, Al₂O₃, CaO, Fe₂O₃, MgO, P₂O₅, P₄O₁₀, K₂O, SiO₂, Na₂CO₃, NaHCO₃, etc.

More preferably, the ash originates from the incineration of sewage sludge and it is therefore referred to as sewage sludge ash.

In the context of the present invention, the term "sewage sludge" refers to any suspension of finely dispersed particles of a solid substrate in a liquid. In a preferred embodiment, the liquid in which the particles are suspended is waste water as herein defined.

The term "waste water" relates to all liquids of aqueous nature and/or organic nature, or mixtures thereof, which do not have drinking water quality within the meaning of drinking water standards.

In a particular embodiment, the sewage sludge occurs as primary sludge, raw sludge, excess sludge, as treated and/or stabilized sewage sludge (aerobic/anaerobic).

The term "bio-wastes" relates to all organic wastes of animal or plant origin that is generated in a household or factory and can de degraded by microorganisms, soil-living organisms or enzymes.

The term "phosphates" concerns P₂O₅ and P₄O₁₀. Furthermore, the term "phosphates" refers to the salts and esters of orthophosphoric acid (H₃PO₄) and involves expressly the condensates (polymers) of orthophosphoric acid and their esters. In particular, the term "phosphates" refers to metallic salts of phosphoric acid with the general formula X(Y)ₘ(PO₄)ₙ, where X, and optionally Y, is a metal selected from the group consisting of aluminium, beryllium, bismuth, lead, cadmium, chromium, iron, gallium, indium, potassium, cobalt, copper, magnesium, manganese, molybdenum, sodium, nickel, osmium, palladium, rhodium, ruthenium, strontium, titanium, vanadium, tungsten, zinc and tin.

Preferably, the ash treated by this process has a phosphorous content, expressed in percentages by weight of phosphates in the ash, of at least 5%, ideally of at least 7% and preferably from 7 to 20%.

The phosphorous-bearing raw material, before being used as feed in the process of the invention, may be finely ground until reaching an appropriate particle size with a maximum size of 2 mm.

The different steps of the process of the invention are detailed herein below.

### First leaching step (step a)

The first step of the process of the invention consists in a first leaching of the phosphorous-bearing solid raw material with an acid aqueous solution. Feeding the acid aqueous solution to first leaching is controlled so as to maintain the pH between 1.5 and 3, preferably between 1.5 and 2.

Under these conditions, a main fraction of the phosphorous contained in the solid raw material is gradually leached in the form of phosphoric acid. Other elements, such as iron, aluminium and calcium, also pass into solution. As a result, an aqueous phase containing said main fraction of phosphorous in the form of phosphoric acid is obtained, whereas the remaining fraction of the phosphorous from the solid raw material remains undissolved as a non-leached solid residue.

Preferably, the first leaching step is carried out under conditions which cause phosphorous to be dissolved in preference to other metal components. In this step, from 60 to 85 wt% of the phosphorous contained in the raw material is dissolved in the leaching acid aqueous solution.

In a particular embodiment, the phosphorous-bearing raw material is leached in the acid aqueous solution at a temperature in the range of from 10°C to 90°C, more preferably at room temperature, i.e., from 20 to 30°C.

Said first leaching step with the acid aqueous solution takes place preferably with a residence time between 1 and 5 h, more preferably between 1 and 3 h.

In another particular embodiment, the acid that may constitute the acid aqueous solution is selected from sulfuric acid, hydrochloride acid, perchloride acid, nitric acid, hydrofluorine acid and waste acid solutions, provided that the resulting acid aqueous solution has a pH between 1.5 and 3.

The acid aqueous solution used in the first leaching step is, preferably, an aqueous medium which contains a weight majority of sulfuric acid, optionally in combination with other acids, such as HCl.

Advantageously, this acid aqueous solution at least partly consists of a recycled solution resulting from the solvent extraction of phosphoric acid according to step e) of the process of the invention, i.e., the aqueous raffinate resulting from step e) which contains at least a strong acid.

In a preferred embodiment, the acid in the acid aqueous solution is sulfuric acid. In this particular case, the compounds that are formed after said first leaching step are mainly phosphoric acid, Al₂(SO₄)₃, Fe₂(SO₄)₃ and CaSO₄ according to the following reactions:

P₂O_{5 (s)} + H₂O ₍ₗ₎ → 2 H₃PO_{4 (l)}

Al₂O_{3 (s)} + 3 H₂SO_{4 (l)} → Al₂(SO₄)_{3 (l)} + 3 H₂O ₍ₗ₎

Fe₂O_{3 (s)} + 3 H₂SO_{4 (l)} → Fe₂(SO₄)_{3 (l)} + 3 H₂O ₍ₗ₎

CaO ₍ₛ₎ + H₂SO_{4 (l)} → CaSO_{4 (s)} + H₂O ₍ₗ₎

In the first leaching step, the phosphorous values dissolve as phosphoric acid, along with Fe, Al and other impurities.

Thus, after the first leaching step, it is obtained a non-leached solid residue still containing a fraction of the phosphorous contained in the raw material, as well as a phosphorous-rich solution comprising solubilized phosphoric acid, also referred to as leached solution. Particularly, the leached solution can have from 60 to 85 wt% of the phosphorous contained in the solid raw material and also metal ions originating from metal oxides, such as Fe, Al and Ca, whereas the remaining phosphorous is transferred to the solid phase (non-leached solid residue) for further leaching.

Accordingly, a solid-liquid separation treatment may be carried out in order to separate said leached solution containing phosphoric acid along with other impurities from the non-leached solid residue.

After separation of the undissolved residue from the leached solution, the leached solution containing the phosphoric acid is brought to the neutralization step b), whereas the non-leached solid residue is brought to the second leaching step c).

In a particular embodiment, the leached solution containing the phosphoric acid can be previously fed to a sulfidizing area in order to remove possible Cu traces present in said leached solution in the form of CuSO₄. For doing that, Na₂S is added to the leached solution under controlled redox conditions, where the following reaction takes place:

CuSO_{4 (l)} + Na₂S ₍ₛ₎ → CuS ₍ₛ₎ + Na₂SO_{4 (l)}

This sulfidizing step may be carried out at room temperature using a redox potential between 50 and 100 mV (Ag/AgCl) with a residence time of at least 1 h.

As a result, a solid containing Cu in the form of CuS is obtained, which is removed from the system, whereas the liquid phase containing the phosphoric acid is fed to the neutralization step.

### Neutralization step (step b)

The leached solution obtain in step a) is then fed to the neutralization step (step b)) in order to recover the phosphorous dissolved therein by means of precipitation. Said neutralization treatment is performed at a pH compatible with the precipitation of each impurity, mainly constituted by iron, aluminium and calcium.

Said neutralization is carried out in the presence of a neutralization agent. The neutralization agent may be any typical alkaline agent, such as hydroxides, carbonates, bicarbonates, in particular, calcium carbonates or hydroxides and, more particularly, chalk or lime.

The neutralization step is carried out at a temperature close to that reached in the first leaching step, i.e., at a temperature below 90°C, more preferably from 20 to 30°C. The residence time is of the same order of magnitude as in the first leaching step, i.e., between 1 and 5 h, more preferably between 1 and 3 h. At the end of the neutralization step, the pH of the neutralized leached solution is brought to a value between 4 and 7, preferably between 5 and 6.

Depending on the characteristics of the raw feed material and plant capacity, the neutralization treatment may be carried out in several stages in cascade.

When the neutralization is carried out in several stages, the final pH post-neutralization can evolve in a controlled manner until reaching the value set for the different stages in order to selectively precipitate the impurities.

As a result of the neutralization treatment, a solid phase containing the precipitates and a liquid phase containing some dissolved impurities are obtained.

In a particular embodiment, Ca₃PO₄, FeOOH, Al(OH)₃ and CaSO₄ are precipitated according to the following reactions:

H₃PO_{4 (l)} + 3 Ca(OH) ₂₍ₛ₎ → Ca₃PO_{4 (s)} + 6 H₂O ₍ₗ₎

Fe₂(SO₄)_{3 (l)} + 3 Ca(OH)_{2 (s)} → 2 FeOOH ₍ₛ₎ + 3 CaSO_{4 (s)} + 2 H₂O ₍ₗ₎

Al₂(SO₄)_{3 (l)} + 3 Ca(OH)_{2 (s)} → 2 Al(OH)_{3 (s)} + 3 CaSO_{4 (s)}

Having concluded the neutralization step, a solid-liquid separation can take place, allowing the solid precipitates to be sent to the second leaching step together with the non-leached solid residue coming from the first leaching step. The liquid phase obtained after neutralization that contain some dissolved impurities may be brought to an effluent treatment stage where the impurities are dispatched. For example, it can be subjected to a neutralization step at a pH of 9.

### Second leaching step (step c)

The solid precipitates obtained after neutralization and the non-leached solid residue obtained after first leaching step, both containing the phosphorous values from the solid raw material, are fed to a second leaching area where said phosphorus is solubilized in the form of phosphoric acid.

This second leaching step is carried out under more severe conditions than the first leaching step with the aim of dissolving most of the phosphorous contained in the solids. Particularly, the second leaching step is performed in an acid aqueous solution of greater strength, so as the pH is lower than 0.5.

Advantageously, said second leaching step may be carried out at a temperature ranging from 70°C to 100°C, preferably from 75°C to 90°C and more preferably at 80°C.

In a particular embodiment, the second leaching step takes place preferably with a residence time between 1 and 5 h, more preferably between 1 and 3 h, even more preferably with a residence time of 2 h.

The acid used in this second leaching may be at least one member of the group specified in connection with the first leaching, i.e., sulfuric acid, hydrochloride acid, perchloride acid, nitric acid, hydrofluorine acid and waste acid solutions, provided that the resulting acid aqueous solution has a pH lower than 0.5.

In a preferred embodiment, the acid used in the acid aqueous solution is sulfuric acid. More preferably, sulfuric acid is used in a dose which varies from 1 to 2 kg per kg of solid raw material, even more preferably from 1.2 to 1.5 kg per kg of solid raw material, so as about 250 g/L of free sulfuric acid are obtained in the resultant leached solution, also referred to as pregnant leached solution.

When sulfuric acid is used in this second leaching step, compounds H₃PO₄, Fe₂(SO₄)₃, Al₂(SO₄)₃ and CaSO₄ are formed in accordance to the following reactions:

Ca₃P₂O_{8 (s)} + 3 H₂SO_{4 (1)} → 2 H₃PO_{4 (l)} + 3 CaSO_{4 (s)}

Fe₂O_{3 (s)} + 3 H₂SO_{4 (l)} → Fe₂(SO₄)_{3 (l)} + 3 H₂O ₍ₗ₎

AlPO_{4 (l)} + 3 H₂SO_{4 (l)} → 2 H₃PO_{4 (l)} + Al₂(SO₄)_{3 (l)}

The acid aqueous solution used in the second leaching step may be also a recycled solution formed by the combination of the remaining aqueous raffinate obtained in step e) which has not been used in the first leaching step, containing at least a strong acid, with a recovery acid coming from other steps of the process of the invention.

For example, when sulfuric acid is used in the leaching steps, the recycled solution is formed by the combination of the aqueous raffinate resulting after conducting step e) with acid water coming from the washing of sulfuric acid and from wake-up of sulfuric acid as described hereinafter.

After conducting this second leaching, a H₃PO₄-rich pregnant leached solution is obtained, as well as a solid residue containing some impurities.

The sequential process comprising the first leaching conducted under moderate conditions, neutralization and second leaching conducted under higher acidic conditions at elevated temperatures, provides a high extraction efficiency as regards the phosphorus contained in the solid raw material. In fact, at least 95 wt% of the phosphorous present in the solid raw material is recovered in the pregnant leached solution in the form of phosphoric acid.

A solid-liquid separation treatment may also be carried out after the second leaching step, thus separating the pregnant leached solution containing the phosphoric acid from the non-leached solid residue.

It should be understood that each step of the method described herein, whether this is first leaching, neutralization and second leaching, may be advantageously be carried out in several successive reactors. More particularly, the different reactors where these steps are carried out are arranged in series and operate under counter-current conditions.

### First solvent extraction (step d)

The pregnant leached solution resulting from the second leaching step (step c) not only contains phosphoric acid dissolved therein but also a high amount of solubilized iron. Since this metal negatively affects the extraction of phosphoric acid, reducing its extraction efficiency, it becomes necessary to remove it from said pregnant leached solution, being advantageously recovered for further applications. Furthermore, when sulfuric acid is used as leaching solution in the second leaching step, the pregnant leached solution is also enriched in sulfuric acid.

Therefore, the process of the invention further includes an additional step where the pregnant leached solution is subjected to an iron extraction step in order to eliminate and recovered said metal.

The process to remove the iron from the pregnant leached solution consists of the extraction of iron therefrom with an acid organic solvent having affinity or selectivity for iron, thus obtaining an iron-loaded organic phase and an aqueous raffinate containing phosphoric acid.

Thus, in step d) of the process of the invention, the pregnant leached solution obtained from the second leaching step is put in contact with said acid organic solvent, preferably under counter-current conditions.

The acid organic solvent is preferably selected from alkyl phosphoric acids, alkyl phosphonic acids, alkyl phosphinic acids, and more preferably from di-(2-ethylhexyl) phosphoric acid (D₂EPHA), di-(2-ethylhexyl) phosphonic acid and di-(2,4,4-trimethyl-pentyl)phosphinic acid.

For its use in iron extraction, the organic solvent is preferably dissolved in an organic compound or in a mixture of organic compounds originating from an oil-moiety, such as C₁₁-C₁₄ paraffins and naphthalenes, e.g. kerosene. The concentration of the organic solvent in the organic compound is between 5 and 75 wt%, and preferably from 30 to 50 wt%.

During this step, the iron is selectively and gradually loaded into the organic liquid phase, releasing H⁺ ions.

The iron extraction step is preferably carried out at a temperature ranging from room temperature to 50°C, preferably at 30°C.

The weight ratio between quantities in the organic phase and aqueous phase at the extraction step (O/A ratio) is selected according to the process conditions to successfully reach correct physical and chemical behaviour, but generally positioned between 1 and 10, preferably between 2 and 5, more preferably between 3 and 4.

This extraction step may be advantageously carried out in several stages, for example said extraction is repeated twice or even more times.

It has been observed that the organic solvent used in the iron extraction step also extracts a fraction of the phosphorous contained in the pregnant leached solution. In order to recover said phosphorous from the organic solvent and therefore to avoid losses in the recovery of said compound, said retained phosphorous is re-extracted from the organic phase with an acid aqueous solution containing sulfuric acid and, optionally, chloride ions. Said acid aqueous solution may come from the first chloride scrubbing step as detailed below.

The resulting aqueous phase thus contains the re-extracted phosphorous along with a mixture of sulfuric acid, and optionally chloride ions, and can be fed to the neutralization and leaching steps in order to grasp the extracted phosphorous.

Preferably, this phosphorous recovery step is carried out at a temperature ranging from 30 to 50°C, more preferably at 40°C with a volumetric organic/aqueous ratio from 5 to 10, preferably said ratio is 8. This phosphorous recovery step can be performed several times, such as twice or three times.

The iron-loaded organic solution that exists the extraction step d) also contains entrained impurities is small quantities. Thus, in a particular embodiment, the iron contained in the organic phase can be subjected to a stripping step (from now onwards first stripping step) in order to remove all traces of remaining impurities still present, thus recovering the iron with higher purity.

For doing that, the iron-loaded organic solution is treated with an aqueous acid solution, preferably with a hydrochloric acid solution having an acidity between 2 and 10 mol/L, more preferably between 4 and 8 mol/L. More preferably, the pH of the hydrochloric acid solution is lower than 0.1. The weight ratio between quantities in the organic phase and aqueous phase at the first stripping step (O/A ratio) is selected from 2 to 3.

The first stripping step is preferably carried out at a temperature ranging from room temperature to 50°C, preferably at 40°C. The residence time can vary between 5 min and 1 h, preferably from 5 to 15 min.

Said first stripping step can also be carried out in several stages, for example said first stripping is repeated twice, three times and preferably four or five times.

By means of this sequence of steps, i.e., extraction and first stripping of iron, the iron is recovered in the form of FeCl₃/HCl in a high efficient way and with high purity, without the presence of impurities such as Ca, Al or Mg. Thus, the first stripping step leads to an aqueous phase containing FeCl₃/HCl and an organic phase which is recycled to the iron extraction step.

Since chloride ions can be physical and chemically retained in the organic solvent after the iron first stripping step and they can also be finally reported to the H₃PO₄-rich pregnant leached solution and to the final H₃PO₄ product, said chloride ions are preferably removed. Thus, in a particular embodiment, the organic phase resulting from the first stripping step is scrubbed with a flow of sulfuric acid.

Preferably, said scrubbing step (from now onwards first scrubbing step) is carried out at a temperature ranging from 30 to 50°C, more preferably at 40°C with a volumetric organic/aqueous ratio from 5 to 10, preferably said ratio is 8. This first scrubbing step can be performed several times, such as twice or three times.

The resulting organic phase has a chloride ion content lower than 0.1 g/L and can be recycled to the iron extraction step, whereas the resulting aqueous phase containing chloride ions and sulfuric acid can be used in the phosphorous recovery step mentioned above.

Furthermore, metal Ti is also retained in the resulting organic phase since it is not re-extracted in the first stripping step thus producing an increase in the viscosity of the organic phase making more difficult to separate both phases.

Thus, in a particular embodiment, and previously to recycle the resulting organic phase to the iron extraction area, a fraction of the organic phase resulting from the first scrubbing step mentioned above is put in contact with a flow aqueous mixture of sulfuric acid and H₂O₂. Under these conditions, the metal Ti is extracted from the organic phase thus resulting in an organic phase having a Ti content lower than 0.2 g/L which is mixed with the remaining organic phase leading to a total Ti content lower than 0.5 g/L. The resulting aqueous phase thus contains a mixture of sulfuric acid and H₂O₂ along with the extracted Ti which should be subjected to an adequate treatment.

Preferably, this step of removing metal Ti is carried out at a temperature ranging from 30 to 50°C, more preferably at 40°C with a volumetric organic/aqueous ratio from 2 to 4.

Also preferably, the aqueous flow mixture contains a H₂SO₄/H₂O₂ ratio between 10 and 20, more preferably from 15 to 18.

In a particular embodiment, and in order to separate FeCl₃ from HCl resulting from the first stripping step, the aqueous phase containing FeCl₃/HCl is subjected to a second extraction step by contacting it with a basic extraction agent, preferably with a tertiary amine, such as Alamine 336.

The basic agent can be admixed with a modifier, such as isodecanol, and/or a diluent, originating from an oil-moiety, such as compounds containing C₁₁-C₁₄ paraffins and naphthalenes, e.g. Shellsol D70. The weight percentage of the basic extraction agent in the resulting mixture is between 30 and 60%, more preferably from 30 to 50%.

The second extraction step is preferably carried out at a temperature ranging from room temperature to 50°C, more preferably at 30°C.

The weight ratio between quantities in the organic phase and aqueous phase at the second s extraction step (O/A ratio) is selected according to the process conditions to successfully reach correct physical and chemical behaviour, but generally positioned between 0.1 and 5, preferably between 0.1 and 2, more preferably between 0.1 and 1, even more preferably between 0.4 and 0.7.

This second extraction step may be advantageously performed in several stages, for example said second extraction is repeated twice, or three times.

Advantageously, this second extraction step is followed by an additional stripping step (second stripping step) in the presence of water.

The second stripping step is preferably carried out at a temperature ranging from room temperature to 50°C, more preferably at 30°C.

The weight ratio between quantities in the organic phase and aqueous phase at the second stripping step (O/A ratio) is selected between 1 and 5, preferably between 2 and 4.

It may be advantageously performed in several stages, for example said second stripping is repeated twice, three times or even four times.

Furthermore, the depleted HCl resulting from the second stripping steps may be recycled to be used in the first stripping of iron.

### Second solvent extraction (step e)

Once the iron has been removed according to the preceding step described above, the aqueous raffinate obtained after step d), containing phosphoric acid, is then subjected to a liquid-liquid extraction step (step e)) in order to reduce significantly the content of other metal impurities present in said aqueous raffinate, more particularly Ca, Al,... thus contributing to obtain phosphoric acid with high purity.

This step (also referred to as third extraction step) includes the extraction of phosphoric acid by putting in contact the aqueous raffinate obtained in step d) with an organic solvent, preferably under counter-current conditions. Therefore, an organic extraction phase containing phosphate ions and an acid aqueous phase containing impurities are obtained. The organic solvent traps the molecules of phosphoric acid by means of a solvatation process.

The organic solvent is preferably selected from methyl iso-butyl ketone (MIBK), tributyl phosphate (TBP), 1-heptanol, di-isopropyl ether (DIPE), and mixtures thereof, for example a mixture of MIBK and TBP, a mixture of MIBK and 1-Heptanol, a mixture of TBP and 1-Hepatanol, more preferably the organic solvent is TBP. Said organic solvent is used without being dissolved in any other organic compound.

During this step, the phosphoric acid is selectively and gradually loaded into the organic liquid phase, releasing H⁺ ions. Therefore, after conducting the third extraction step, a phosphorous-loaded organic phase is formed, as well as an acid aqueous extraction phase, also referred to as an aqueous raffinate, which may be recycled into the first and second leaching steps of the process of the invention.

In a particular embodiment, when sulfuric acid is used in the acid aqueous leaching solution, this is also extracted in the organic phase together with phosphoric acid, making advisable to remove it therefrom in order to avoid the phosphoric acid to contain such impurity.

Therefore, in a particular embodiment, the process of the invention further comprises a second scrubbing step involving the scrubbing of the organic extraction phase with an aqueous solution of an acid, such as phosphoric acid, thus providing a scrubbed organic phase containing phosphoric acid and an aqueous phase containing sulfuric acid and other co-extracted metal cation impurities. Said aqueous phase containing the extracted sulfuric acid may be also recycled into the leaching steps with the aim of reducing the intake of such acid.

Said second scrubbing step may be carried out at a temperature between 20 and 60°C, preferably from 40 to 60°C, with a residence time ranging from 5 to 15 min.

Similarly, if other acid than sulfuric acid is used in the acid aqueous leaching solution, this can also be extracted in the organic phase together with phosphoric acid, thus leading also to some impurities. Said impurities could be removed by any scrubbing step known by those skilled in the art equivalent to that second scrubbing step mentioned above.

### Stripping step (step f)

The phosphorous-loaded organic phase obtained after conducting step e), and preferably scrubbed according to the second scrubbing step mentioned above, is then subjected to a stripping step (step f)) (also referred to as third stripping step) in the presence of water in order to recover the phosphoric acid.

This third stripping step is preferably carried out at temperature lower than 70°C, preferably from 40 to 65°C, with a residence time ranging from 5 to 15 min.

A purified aqueous solution of phosphoric acid is obtained with a phosphoric acid concentration ranging from 20 to 30%.

Subsequently, said aqueous solution may be subjected to concentration thus reaching a concentration of at least 75% required for a technical grade phosphoric acid.

Although the second scrubbing step mentioned above allows an efficient removal of the sulfuric acid co-extracted in the organic phase, a very small quantity can be still retained (ppms) in the organic solvent which is subsequently reported and concentrated in the final product. Thus, in a preferred embodiment, and in order to remove the residual sulfuric acid, the process of the invention also includes a precipitation step which comprises the addition of BaCO₃ to the aqueous solution of phosphoric acid or to the concentrated aqueous solution of phosphoric acid, thus precipitating SO₄²⁻ ions in the form of BaSO₄ according to the following reaction:

BaCO_{3 (s)} + H₂SO_{4 (l)} → BaSO_{4 (s)} + CO_{2 (g)} + H₂O ₍ₗ₎

In a particular embodiment, the process of the invention further comprises a step to remove the As cation from the aqueous solution of phosphoric acid obtained after the third stripping step f). This step includes the addition of Na₂S in said aqueous solution, thus obtaining a liquor of phosphoric acid without As cation impurities and a solid containing precipitated As in the form of As₂S₃ according to the following reaction:

2 H₃AsO_{3 (l)} + 3 Na₂S ₍ₗ₎ → As₂S_{3 (s)} + 6NaOH ₍ₗ₎

Said solid containing precipitated As can be removed by filtration.

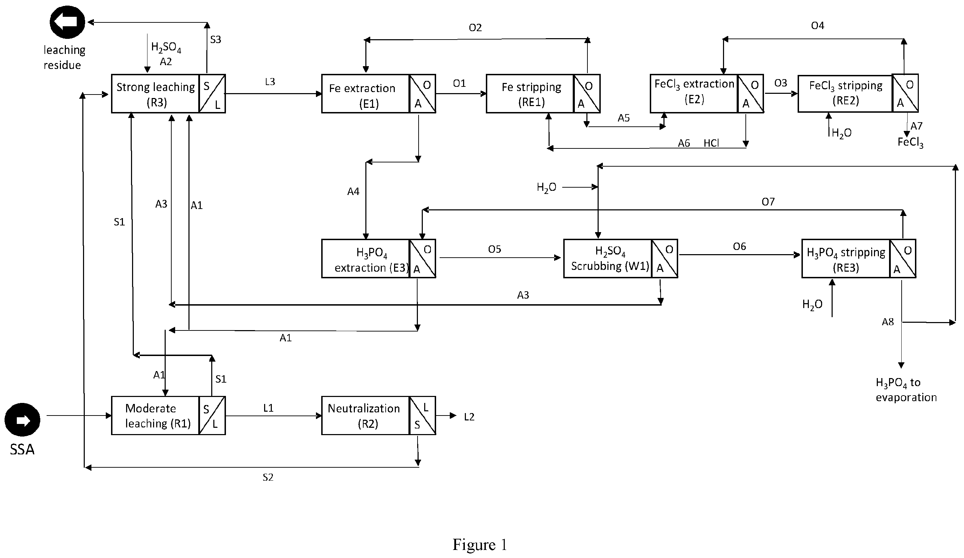

Figure 1 illustrates a flow chart of an installation for producing phosphoric acid applying a process according to example 1 below.

### Example 1. Production of technical grade phosphoric acid

A solid sewage ash (SSA) was fed to a moderate leaching area (R1). There, the SSA was leached with a sulfuric aqueous solution having a pH between 1.5 and 2 at a temperature of 25°C and a residence time of 2 hours. Said sulfuric acid solution partly consisted of the aqueous raffinate (A1) originating from the phosphoric acid extraction area (E2).

Under these conditions, a phosphorous-rich leached solution (L1) comprising solubilized phosphoric acid, as well as Fe, Al, Ca and other impurities, was obtained along with a non-leached solid residue (S1) containing the remaining phosphorous that had not been leached.

Subsequently, a solid-liquid separation treatment was performed in order to separate the leached solution (L1) from the non-leached solid residue (S1).

The leached solution (L1) was then fed to the neutralization area (R2) in order to recover the phosphorous dissolved therein by means of precipitation. Thus, lime was added to the leached solution (L1) so as pH of the resulting mixture was between 5 and 6 and said mixture was maintained at a temperature of 25-30°C for 2 hours.

As a result, a solid (S2) containing precipitated phosphorous in the form of Ca₃PO₄ was obtained, along with a liquid phase (L2) containing some dissolved impurities.

A solid-liquid separation was conducted allowing the solid precipitate (S2) to be sent to a second leaching area (R3) together with the non-leached solid residue (S1) obtained in the first leaching area (R1), whereas the liquid phase (L2) was brought to an effluent treatment stage where the impurities were dispatched.

Solid (S1) and (S2) were then fed to a second leaching area (R3) where phosphorous contained in these solids was solubilized in the form of phosphoric acid in the presence of a sulfuric aqueous solution having a pH lower than 0.5. Said sulfuric aqueous solution came from:
- an aqueous solution of sulfuric acid (A2);
- a remaining fraction of the aqueous raffinate (A1) from phosphoric acid extraction (E2);
- acidic water (A3) coming from the sulfuric scrubbing area (W1).

Said second leaching step was carried out at 80°C for 2 hours using a sulfuric acid dose of 1.3 kg/kg SSA, so as 250 g/L of free sulfuric acid are obtained in the resultant leached solution.

After conducting the second leaching step, a pregnant leached solution (L3) is obtained containing the phosphoric acid as well as a solid residue (S3) containing some impurities.

A solid-liquid separation was carried out, thus separating the pregnant leached solution (L3) from the non-leached solid residue (S3), being said residue dispatched.

The pregnant leached solution (L3) was subjected to an iron extraction step in the iron extraction area (E1) in order to remove said metal and to recover it in the form of FeCl₃/HCl.

This step was performed six times in the presence of an organic phase consisting of 40% D₂EHPA as extracting agent, and 60% of Shellsol D70 as diluent.

This step led to an aqueous raffinate (A4) containing 1.5-1.7 g/L Cl and 6-9 g/L of iron and an organic phase (O1) containing solubilized iron.

The organic phase (O1) was subjected to five steps of stripping in the iron stripping area (RE1) in the presence of HCl at 30°C with an organic/aqueous volumetric ratio of 2.6. As a result, an aqueous phase (A5) containing 33-35 g/L FeCl₃ and 205-210 g/L HCl is obtained, as well as an organic phase (O2) which is recycled to the iron extraction area (E1).

This aqueous phase (A5) is fed to a second extraction area (E2) in order to separate FeCl₃ from HCl.

This second extraction step was performed twice in the presence of an organic phase consisting of 40% alamine 336 as extracting agent, 21% of isodecanol as modifier and 39% of Shellsol D70 as diluent.

This step led to an aqueous raffinate (A6) containing 165-170 g/L HCl and less than 100 ppm of iron and an organic phase (O3) containing solubilized iron.

The organic phase (O3) was then subjected to four steps of stripping in the second stripping area (RE2) in the presence of water at 30°C with an organic/aqueous volumetric ratio of 3.7. As a result, an aqueous phase (A7) containing 160-170 g/L FeCl₃ and 5-10 g/L HCl is obtained, along with an organic phase (O4) which is recycled to the extraction area (E2).

The aqueous raffinate (A6) containing the HCl was recycled to be used again in the iron stripping area (RE1), whereas the aqueous phase (A7) containing dissolved FeCl₃ was recovered from the system.

Once the iron was removed, the aqueous raffinate (A4) containing phosphoric acid was fed to the extraction area (E3) where it was subjected to a liquid-liquid extraction under counter-current conditions by using tributyl phosphate as organic extraction agent without using any solvent. Therefore, an organic phase (O5) containing phosphate ions and an acid aqueous raffinate (A1) are obtained. Said aqueous raffinate (A1) was recycled to be used in the leaching steps as mentioned above.

The organic phase (O5) was then scrubbed with an aqueous solution of phosphoric acid at a temperature of 50°C and a residence time of 10 min in the sulfuric scrubbing area (W1), so as a scrubbed organic phase (O6) containing phosphoric acid along with an aqueous phase (A3) containing sulfuric acid and other co-extracted metal cation impurities are obtained. This aqueous phase (A3) was recycled into the second leaching area (R3), whereas the scrubbed organic phase (O6) was subjected to a stripping step in the H₃PO₄ stripping area (RE3).

This stripping step was conducted in the presence of water at a temperature of 70°C with a residence time of 10 min. As a result, a purified aqueous solution (A8) of phosphoric acid was obtained, as well as an organic phase (O7) which was recycled into the extraction area (E3). Part of the purified aqueous solution (A8) was fed to the sulfuric scrubbing area (W1).

The composition of the purified aqueous solution (A8) was the following:

| | |
|---|---|
| H₃PO₄ | 20.7 wt% |
| SO₄²⁻ | < 50 mg/L |
| Cl⁻ | < 150 mg/L |
| Pb | < 1 mg/L |
| Cd | < 1 mg/L |
| F⁻ | < 10 mg/L |
| Fe | < 1 mg/L |
| Mn | < 1 mg/L |
| Cr | < 1 mg/L |
| Ni | < 10 mg/L |
| Hg | < 0.01 mg/L |
| Zn | < 15 mg/L |
| As | 5.6 mg/L |

### Example 2. Production of technical grade phosphoric acid

Example 1 was repeated but introducing one or more additional steps as the ones detailed below:

### Cu removal

The leached solution (L1) obtained after the first leaching step contained 130 mg/L of Cu in the form of CuSO₄. In order to remove it, Na₂S was added to the leached solution (L1) under controlled redox conditions, namely using a redox potential between 50 and 100 mV (Ag/AgCl), at room temperature with a residence time of 1 h. As a result, a solid containing Cu in the form of CuS was obtained which was removed, whereas the Cu-free liquid phase containing the phosphoric acid was fed to the neutralization area (R2).

This provided a Cu content in the final purified aqueous solution lower than 1 mg/L.

### Sulphate removal

BaCO₃ was added to the aqueous solution (A8) resulting from re-extraction of phosphoric acid in order to precipitate the residual sulfuric acid contained therein, thus precipitating SO₄²⁻ ions in the form of BaSO₄.

### As removal

NaS was added to the aqueous solution (A8) resulting from phosphoric acid re-extraction in order to precipitate As cations contained therein. As a result, a liquor of phosphoric acid without As cation impurities is obtained, along with a solid residue containing precipitated As in the form of As₂S₃ which was removed by filtration.

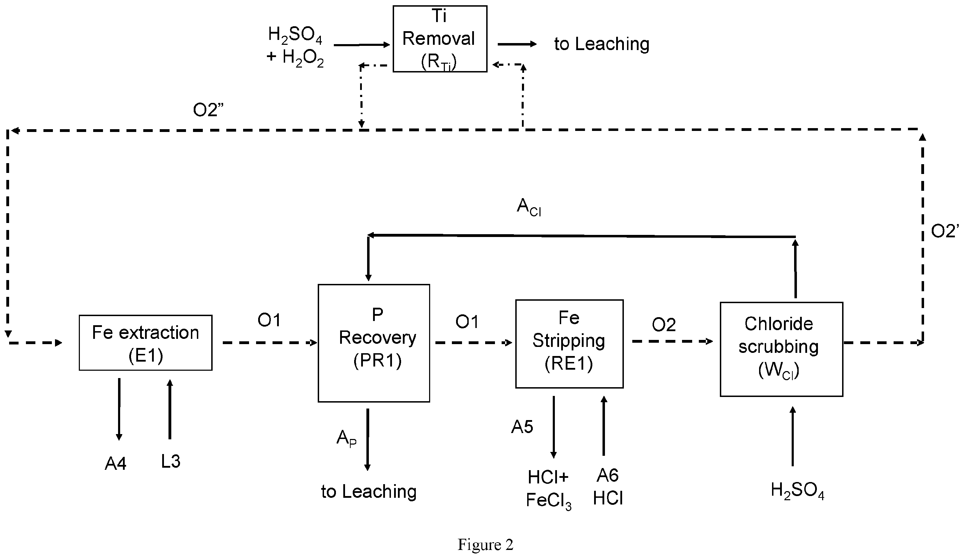

Figure 2 shows a flow chart of the chloride scrubbing, phosphorous recovery and Ti removal, steps detailed below which were included within the iron extraction unit.

### Chloride scrubbing

The organic phase (O2) resulting from the iron stripping area (RE1) was subjected to a scrubbing step in the chloride scrubbing area (W_{Cl}) with an aqueous sulfuric acid flow having 20 g/L of sulfuric acid at a temperature of 40°C and with an organic/aqueous volumetric ratio of 8. This scrubbing step was repeated twice.

The resulting scrubbed organic phase (O2') had a chloride ion content lower than 0.1 g/L which was recycled to the iron extraction area (E1), whereas the resulting aqueous phase (A_{Cl}) containing 18-20 g/L of sulfuric acid and 16-18 g/L of Cl⁻ was used in the phosphorous recovery area (PR1) as defined below.

This additional step allowed to reduce the chloride content in the final purified aqueous solution to less than 40 mg/L in contrast to that obtained according to the process of example 1.

### Phosphorous recovery

The aqueous phase (A_{Cl}) containing sulfuric acid and chloride ions resulting from the chloride scrubbing step as described in the paragraph above, was used to wash the organic phase (O1) originating from the iron extraction area (E1) which still retained a fraction of the phosphorous from the leached solution (L2).

This phosphorous recovery step was conducted twice at 40°C with an organic/aqueous volumetric ratio of 8 in the phosphorous recovery area (PR1).

The resulting aqueous phase (A_{P}) then contained the recovered phosphorous along with sulfuric acid and chloride ions, which was recycled to be used in the neutralization area (R2) and leaching areas (R1) and (R3) in order to recover said phosphorous.

Although this recovery stage does not affect the quality of the final product, it did allow a greater amount of phosphorus to be recovered, thus increasing the yield of the process.

### Ti removal

30% of the organic phase (O2') originating from the iron stripping area (RE1), and subsequently subjected to chloride scrubbing, was put in contact with an aqueous solution containing 300 g/L of H₂SO₄ and 18 g/L of H₂O₂ with an organic/aqueous volumetric ratio of 3 in the Ti removal area (R_{Ti}) at a temperature of 40°C. Under these conditions, metal Ti was extracted from the organic phase resulting in an organic phase (O2") having a Ti content lower than 0.2 g/L which was mixed with the remaining organic phase (O2) leading to a total Ti content lower than 0.5 g/L. This reduction in the amount of Ti allows reducing the viscosity of the organic phase thus making the separation of organic and aqueous phases easier.

## Claims

1. A process for recovering phosphoric acid from sewage sludge ash having a phosphorous content, expressed in percentage by weight of phosphates in the ash, of at least 5%, said process comprising:
a) a first leaching step of the sewage sludge ash with an acid aqueous solution, feeding said acid aqueous solution so as the pH is maintained between 1.5 and 3, thus obtaining:
i) a leached solution comprising, solubilized, a main fraction of the phosphorous contained in the sewage sludge ash in the form of phosphoric acid; and
ii) a non-leached solid residue comprising the remaining fraction of the phosphorous contained in the sewage sludge ash;
b) a neutralization step of the leached solution obtained in step (a) in the presence of a neutralizing agent, thus precipitating the phosphorous contained in said leached solution;
c) a second leaching step of the non-leached solid residue obtained in step (a) and of the precipitate obtained in step (b), in an acid aqueous solution having a pH lower than 0.5, thus obtaining a pregnant leached solution comprising phosphoric acid and solubilized iron;
d) solvent extraction of the solubilized iron contained in the pregnant leached solution obtained in step c) with an acid organic solvent having affinity for iron, thus obtaining an iron-loaded organic liquid phase and an aqueous raffinate containing phosphoric acid;
e) liquid-liquid extraction of the phosphoric acid from the aqueous raffinate obtained in step d) with an organic solvent, thus obtaining a phosphorous-loaded organic liquid phase and an aqueous raffinate containing impurities;
f) stripping of phosphoric acid from the phosphorous-loaded organic liquid phase obtained in step e) with water at a temperature between 50 and 70°C, thus obtaining an aqueous solution containing phosphoric acid.

2. The process according to claim 1, wherein the acid aqueous solution is fed to step a) so as the pH is maintained between 1.5 and 2.

3. The process according to any one of the preceding claims, wherein the acid aqueous solution used in the first leaching step (step a)) is a sulphuric acid aqueous solution.

4. The process according to claim 3, wherein the sulfuric acid aqueous solution at least partly consists of the aqueous raffinate resulting from step e).

5. The process according to any of the preceding claims, further comprising the addition of Na₂S to the leached solution obtained in the first leaching step a) under a redox potential between 50 and 100 mV (Ag/AgCl).

6. The process according to any one of the preceding claims, wherein the acid aqueous solution used in the second leaching step c) is an aqueous solution of sulfuric acid.

7. The process according to any one of the preceding claims, wherein the organic solvent used in the solvent extraction step d) is selected from alkyl phosphoric acids, alkyl phosphonic acids, alkyl phosphinic acids, preferably is di-(2-ethylhexyl) phosphoric acid (D₂EPHA), di-(2-ethylhexyl) phosphonic acid or di-(2,4,4-trimethyl-pentyl)phosphinic acid, more preferably is D₂EPHA.

8. The process according to any one of the preceding claims further comprising stripping of the iron from the iron-loaded organic liquid phase obtained in step d) with a hydrochloric acid solution having a pH lower than 0.1, thus obtaining an organic phase that is recycled to step d) and an aqueous phase containing FeCl₃/HCl.

9. The process according to claim 8, further comprising subjecting the aqueous phase containing FeCl₃/HCl to a second extraction step by contacting it with a basic extraction agent, followed by an additional stripping step in the presence of water.

10. The process according to any of the preceding claims, further comprising the recovery of phosphorous from the iron-loaded organic liquid phase obtained in step d) with an acid aqueous solution containing sulfuric acid and, optionally, chloride ions.

11. The process according to any one of the preceding claims, wherein the organic solvent used in the liquid-liquid extraction step e) is selected from methyl iso-butyl ketone (MIBK), tributyl phosphate (TBP), 1-heptanol, di-isopropyl ether (DIPE), and mixtures thereof, preferably tributyl phosphate.

12. The process according to claim 6, further comprising scrubbing the phosphorous-loaded organic liquid phase obtained in step e) with an aqueous solution of phosphoric acid, thus obtaining a washed phosphorous-loaded organic liquid phase and an aqueous phase containing sulfuric acid.

13. The process according to claims 6 and 12, wherein the aqueous solution of sulfuric acid as defined in claim 6 is a combination of sulfuric acid, the aqueous raffinate obtained in step e) and the aqueous phase containing sulfuric acid obtained in the scrubbing step as defined in claim 12.

14. The process according to any one of the preceding claims, further comprising subjecting the aqueous solution containing phosphoric acid as obtained in step f) to an evaporation process to obtain technical grade phosphoric acid.
